# EUROPÄISCHE PATENTSCHRIFT

(11) **EP 2 811 316 B1**
(45) Veröffentlichungstag und Bekanntmachung des Hinweises auf die Patenterteilung: **14.10.2020**
(21) Anmeldenummer: 14168846.5
(22) Anmeldetag: 19.05.2014
(51) Int. Cl.: G01S 7/529, G01S 7/534, G01S 7/34, G01S 15/88

(54) **Vorrichtung zur Umfeldsensorik**
Device for environment sensor system
Dispositif de capteur d'environnement

(30) Priorität: 07.06.2013 DE 102013210600
(43) Veröffentlichungstag der Anmeldung: 10.12.2014
(73) Patentinhaber: Robert Bosch GmbH, 70442 Stuttgart (DE)
(72) Erfinder: Karl, Matthias, 76275 Ettlingen (DE)

(56) Entgegenhaltungen:
- WO-A1-89/02086
- FR-A1- 2 400 201
- GB-A- 1 257 520

## Beschreibung

### Stand der Technik

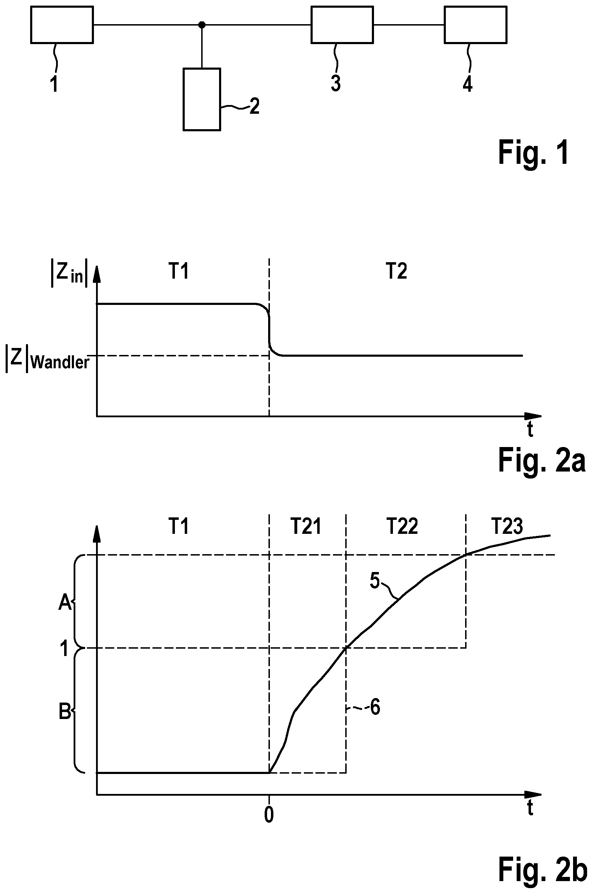

Die vorliegende Erfindung betrifft eine Vorrichtung zur Umfeldsensorik. Insbesondere betrifft die vorliegende Erfindung eine Vorrichtung zur Erkennung von Umgebungsobjekten, wobei eine flexible Anpassung der Dynamik des Eingangssignals an die Dynamik der nachfolgenden Einheiten und somit auch eine Prüfung der verwendeten Sensorik während des Sendevorgangs möglich ist. Viele Systeme zur Umfeldsensorik basieren auf einem Wandler, der zur Aussendung von Signalen in die Umgebung angeregt wird. Die Signale - sofern an Umgebungsobjekten reflektiert - treffen als Echos zeitverzögert an demselben Wandler oder einem benachbarten Wandler ein und werden von diesem in elektrische Signale gewandelt. Zur Auswertung der empfangenen Signale wird das Empfangssignal auf einen Eingangsverstärker im Empfangszweig des Umfeldsensoriksystems geleitet, welcher zum Beispiel einen invertierenden Verstärker aufweist. Ein solches System ist schematisch in Figur 1 dargestellt. Ein Signalgenerator 2 ist eingerichtet, einen Wandler 1 zur Aussendung von Signalen in die Umgebung anzuregen. Am Wandler 1 eingehende Echos werden in der Empfangsverstärkereinrichtung 3 gedämpft bzw. verstärkt und einer Auswerteeinheit 4 zugeführt. Die Auswerteeinheit 4 ist dabei eingerichtet, sowohl während des Sendevorgangs (zum Beispiel zur Erkennung von Defekten oder Vereisungen) als auch während des Empfangsvorgangs von der Empfangsverstärkereinrichtung 3 erhaltene Signale auszuwerten. Insbesondere während des Sendens und kurz danach liegt am Eingang jedoch ein so großes Signal an, dass die Empfangsverstärkereinrichtung bzw. ein in ihr enthaltener Verstärker in Übersteuerung geht. Zur Dynamikanpassung wird im Stand der Technik eine laufzeitabhängige Verstärkung vorgeschlagen, welche durch Anpassung der Verstärkung während der Messzeit und/oder Umschaltung der verwendeten Verstärkerpfade die Verstärkung an die nachfolgende Auswerteeinheit anpasst. Die dazu erforderlichen Widerstände und Schalter stellen jedoch bei der Hochintegration in Schaltkreisen ein Hindernis dar. Dies ist insbesondere dann der Fall, wenn ein weiterer separater Anschluss (Englisch "PIN") am Gehäuse der integrierten Schaltung erforderlich ist. Während des Sendens liegt am Wandler und damit am Eingang der Empfangsverstärkereinrichtung eine Signalamplitude von typischerweise 100 bis 150 Volt an. Dabei hängt die Echo-Peak-Stärke eines Objekts, welche zu einem korrespondierenden elektrischen Eingangssignal der Empfangsverstärkereinrichtung führt, von dem Objektabstand und der Reflexionsfläche ab. Mitunter variiert der Dynamikbereich des Eingangssignals in einem Echozyklus um mehr als den Faktor 5 x 10⁵. Beispielsweise beträgt eine typische Eingangssignalamplitude eines Rohres mit einem Durchmesser von 75 mm Durchmesser in einem Abstand von 2 cm ca. 100 mV. In einem Abstand von 750 cm beträgt die Eingangssignalstärke hingegen nur noch 0,25 µV. Das am Wandler auftretende Sendesignal unterscheidet sich vom kleinsten auswertbaren Empfangssignal somit um einen Faktor von mehr als 10⁹. Andererseits verträgt die derzeit übliche Hardware Signalverarbeitungsamplituden von maximal typischerweise 1,5 V und geeignete preiswerte Analog-Digital-Wandler haben eine Breite von maximal 16bit, können also Amplituden in einem Bereich von maximal 3 x 10⁴ auswerten. Um also den gesamten, während eines Echozyklus auftretenden Signaldynamikbereich mit dem 16bit-Analog-Digital-Wandler auswerten zu können, ist zusätzlich eine Hardware mit einem Dynamikbereich von ca. 3 x 10⁴ erforderlich, um die jeweilige Signalstärke an den Dynamikbereich der nachfolgenden Auswerteeinrichtung, wie zum Beispiel eines Analog-Digital-Wandlers, anzupassen. Dabei ist bekannt, dass zur Erzielung eines möglichst großen Wirkungsgrades während des Empfangens der Empfängerwiderstand idealerweise gleich dem Innenwiderstand des Wandlers ist. Gleichzeitig ist es zur Erzielung eines großen Wirkungsgrades während des Sendens erforderlich, den Empfänger an die Sendestufe mit einem möglichst hohen Innenwiderstand anzuschließen, um wenig Leistung durch den Empfänger zu dissipieren und die über den Wandler abgestrahlte Leistung zu maximieren. Zudem ist die maximal zulässige Eingangsspannung integrierter Schaltungen derzeit auf ca. 40 V begrenzt. Diese Randbedingungen werden durch die Vorrichtungen gemäß dem Stand der Technik nur in nicht zufriedenstellender Weise gelöst.

Zum besseren Verständnis der nachfolgend beschriebenen Erfindung wird auf den Stand der Technik in Form der Druckschriften WO 89/02086 A1, GB 1 257 520 A und FR 2 400 201 A1 hingewiesen.

### Offenbarung der Erfindung

Es wird daher eine Vorrichtung zur Umfeldsensorik gemäß Anspruch 1 vorgeschlagen, die einen Wandler zur Wandlung elektrischer Signale in Sendesignale umfasst. Der Wandler ist als Ultraschallwandler ausgestaltet, wie er in Personenkraftwagen bereits weit verbreitet für Parkassistentanwendungen Verwendung findet. Weiter umfasst die Vorrichtung einen Signalgenerator zur Erzeugung der elektrischen Signale. Diese können beispielsweise Wechselspannungspulse von schmaler Bandbreite sein. Zudem umfasst die Vorrichtung eine Empfangsverstärkereinrichtung zur Verstärkung vom Wandler empfangener Signale. Die Empfangsverstärkereinrichtung ist hierbei eingerichtet, zumindest während des Empfangsvorgangs mit dem Wandler verbunden zu werden. Alternativ kann die Empfangsverstärkereinrichtung permanent mit dem Wandler und/oder dem Signalgenerator verbunden sein. Zudem umfasst die Vorrichtung eine Vielzahl von Impedanzen bzw. Impedanzbauteilen. Diese können linearer oder nichtlinearer Natur sein und im Wesentlichen reale Anteile, optional jedoch auch imaginäre Impedanzanteile, aufweisen. Dabei ist die Vorrichtung erfindungsgemäß eingerichtet, eine Impedanz aus der Vielzahl von Impedanzen auszuwählen und die Ausgangssignalstärke der Empfangsverstärkereinrichtung mittels der ausgewählten Impedanz anzupassen. Die ausgewählte Impedanz kann ein einzelnes Impedanzbauteil sein, kann jedoch auch eine vordefinierte Kombination einzelner Impedanzen der Vielzahl von Impedanzen sein, die zur Erzielung einer geeigneten Gesamtimpedanz in Reihe und/oder parallel zusammengeschaltet werden. Auf diese Weise passt die Vorrichtung die Ausgangssignalstärke der Empfangsverstärkereinrichtung mittels der ausgewählten Impedanz(en) an. Wenn die Vorrichtung auch zum Aussenden der Signale eingerichtet ist, kann die Kenntnis eines Sendezeitpunktes verwendet werden, um eine Impedanz derart auszuwählen, dass das Ausgangssignal der Empfangsverstärkereinrichtung auch während des Sendens nicht übersteuert bzw. eine nachfolgende Auswerteeinheit eingangsseitig übersteuert wird. Mit anderen Worten kann die Vorrichtung aufgrund eines vorangegangenen Sendevorgangs eine zu erwartende Ausgangssignalstärke der Empfangsverstärkereinrichtung bei gegebener Impedanz antizipieren und im Bedarfsfall eine von dieser abweichende Impedanz auswählen, um die Ausgangssignalstärke eines nachfolgenden Messzyklus' anzupassen. Selbstverständlich kann die Auswahl zeitgesteuert, alternativ oder zusätzlich jedoch auch Signalstärke-gesteuert erfolgen. Auf diese Weise ist die Vorrichtung in der Lage sowohl während des Sendevorgangs als auch während des Ausschwing- und Empfangsvorgangs Wandlersignale und Echos gleichermaßen zu empfangen und verzerrungsfrei einer Auswerteeinheit zuzuführen.

Weiter wird die Impedanz so ausgewählt, dass vom Signalgenerator und/oder vom Wandler stammende elektrische Signale bereits vor dem Eingang der Empfangsverstärkereinrichtung abgeschwächt werden. Mit anderen Worten kann die ausgewählte Impedanz in dem Signalpfad zu verstärkender elektrischer Signale eingebracht und von diesen Signalen durchlaufen werden. Alternativ oder zusätzlich kann die ausgewählte Impedanz verwendet werden, um eine Rückkopplung der Empfangsverstärkereinrichtung zu beeinflussen. Mit anderen Worten kann die ausgewählte Impedanz zwischen dem Ausgang und dem Eingang der Empfangsverstärkereinrichtung angeordnet werden, um das Verstärkungsverhalten der Empfangsverstärkereinrichtung dem aktuellen Signalpegel bzw. einem bestimmten Zeitabschnitt innerhalb des Messzyklus' anzupassen.

Die Unteransprüche betreffen bevorzugte Weiterbildungen der Erfindung.

Weiter bevorzugt wird die Impedanz aufgrund einer Zeitsteuerung, also lediglich in Abhängigkeit einer bestimmten Phase innerhalb eines Messzyklus' ausgewählt. Naturgemäß wird während des Sendens eine stärkere Bedämpfung des Wandlersignals erforderlich sein als während des nachfolgenden Empfangsvorgangs. Alternativ oder zusätzlich kann das Ergebnis einer Signalstärkeermittlung verwendet werden, um die erforderliche Impedanz auszuwählen. Dabei kann insbesondere das Ergebnis einer Signalstärkeermittlung während eines zeitlich voranliegenden Messzyklus' verwendet werden, um durch eine erneute Auswahl einer anderen Impedanz das Verstärkungsverhalten der Empfangsverstärkereinrichtung in einem nachfolgenden Messzyklus anzupassen.

Bevorzugt kann die Vielzahl von Impedanzen eine Impedanz mit nicht-linearer Strom-/Spannungs-Kennlinie umfassen. Mit anderen Worten kann die ausgewählte Impedanz so ausgestaltet sein, dass sie selbst eine Signalstärkeabhängige Dämpfung bzw. Verstärkung realisiert. Auf diese Weise kann die ausgewählte Impedanz für einen größeren Signalpegelbereich verwendet werden und die Anzahl erforderlicher Schaltvorgänge kann reduziert werden.

Weiter bevorzugt umfasst die Empfangsverstärkereinrichtung einen ersten Verstärker und einen zweiten Verstärker. Dabei kann die Vorrichtung eingerichtet sein, den ersten Verstärker zu deaktivieren und/oder einen Rückkoppelpfad des ersten Verstärkers zu öffnen, um die ausgewählte Impedanz anstatt in einem Rückkoppelpfad der Empfangsverstärkereinrichtung in einen Vorwärts-Signalpfad des ersten Verstärkers einzubinden. Das Deaktivieren des ersten Verstärkers kann einerseits eine Unterbrechung einer Versorgungsspannung des ersten Verstärkers umfassen, alternativ oder zusätzlich jedoch auch ein Auftrennen eines Eingangssignalpfades des ersten Verstärkers umfassen. Auf diese Weise kann beispielsweise ein Empfangssignal an dem ersten Verstärker vorbei auf einen zweiten Verstärker der Empfangsverstärkereinrichtung geleitet werden. Alternativ oder zusätzlich kann ein Rückkoppelpfad des ersten Verstärkers aufgetrennt bzw. modifiziert werden, so dass die Impedanz anstatt innerhalb des Rückkoppelpfades des ersten Verstärkers anschließend als Dämpfungsglied vor dem Eingang des zweiten Verstärkers angeordnet ist. Dies bietet den Vorteil, die vorgehaltenen Impedanzen mehrfach nutzen zu können und weniger Impedanzbauteile zur Realisierung eines erforderlichen Dynamikbereichs vorhalten zu müssen.

Bevorzugt ist dabei die Vorrichtung eingerichtet, mittels der ausgewählten Impedanz den Innenwiderstand der Empfangsverstärkereinrichtung während eines Sendevorgangs zu erhöhen. Insbesondere kann diese Erhöhung gegenüber einem Innenwiderstand des Wandlers das Doppelte oder das Vierfache betragen. Auf diese Weise wird während des Empfangsvorgangs eine Anpassung des Innenwiderstandes der Empfangsverstärkereinrichtung an den Innenwiderstand des Wandlers möglich, wobei während des Sendevorgangs die Leistungsaufnahme der Empfangsverstärkereinrichtung drastisch verringert und der Wirkungsgrad der Vorrichtung entsprechend erhöht werden kann. Dies kann beispielsweise durch Abschalten einer ersten Verstärkungsstufe erfolgen, wodurch zuvor (aufgrund einer virtuellen Masse am Eingang der ersten Verstärkerstufe) parallel liegende Impedanzbauteile nach dem Abschalten in Reihe liegen und sich daher addieren.

Vorteilhafterweise kann die Vorrichtung eingerichtet sein, zu einem vordefinierten Zeitpunkt, gemessen ab dem Start eines Sendevorgangs (Messzyklus') mittels der ausgewählten Impedanz den Innenwiderstand der Empfangsverstärkereinrichtung auch hinsichtlich des Imaginärteils des Innenwiderstandes des Wandlers auszuwählen. Mit anderen Worten wird eine Impedanz ausgewählt, deren Wert dem konjugiert komplexen Innenwiderstand des Wandlers entspricht. Dies bewirkt eine besonders gute Anpassung des Wandlers an die Empfangsverstärkereinrichtung und erhöht den Wirkungsgrad während des Empfangsvorgangs.

Weiter bevorzugt kann die Empfangsverstärkereinrichtung mehrere hintereinander geschaltete Verstärker umfassen. Dabei kann die Vielzahl von Impedanzen bzw. Impedanzbauteilen den Verstärkern gemeinsam zur Verfügung stehen bzw. ein die Verstärker miteinander verbindendes Impedanznetzwerk bilden. Auf diese Weise kann die Vorrichtung mittels der ausgewählten Impedanz das Verstärkungsverhalten eines einem ersten Verstärker nachfolgenden Verstärkers anpassen. Um eine oder mehrere Impedanzen auszuwählen, kann die Vorrichtung dabei mehrere Schalter umfassen, mittels welcher die Impedanzen zur Bedämpfung oder Verstärkung des Signalpfades verwendet werden können. Beispielsweise wird ein für den ersten Verstärker als Rückkoppelwiderstand geschaltetes Impedanzbauteil nach dem Auftrennen des Eingangs des ersten Verstärkers zu einem Dämpfungsglied hinsichtlich des Eingangs eines nachfolgenden (zweiten) Verstärkers. Alternativ oder zusätzlich kann auch jeder andere Verstärker der Vielzahl von Verstärkern der Empfangsverstärkereinrichtung wahlweise aktiviert und/oder deaktiviert werden. Durch die Verwendung mehrerer hintereinander geschalteter Verstärker ergibt sich die Möglichkeit, einen höheren Dynamikbereich zu erwartender Eingangssignale adäquat zu verstärken.

Bevorzugt kann ein dem ersten Verstärker nachfolgender Verstärker eine Signalstärke-abhängige Verstärkungskennlinie aufweisen. Diese kann insbesondere durch ein nichtlineares Bauelement im Rückkoppelpfad eines als Operationsverstärker ausgestalteten Verstärkers ausgeführt sein. Grundsätzlich kommen hierfür Dioden in Frage, während bestimmte Rückkoppelungscharakteristika auch durch aktive Verstärker in den Rückkoppelpfaden der Empfangsverstärkereinrichtung möglich sind.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: ein schematisches Diagramm zu Komponenten einer Vorrichtung zur Umfeldsensorik;
- Figur 2: ein Zeitdiagramm eines geeigneten Verlaufes einer Impedanz eines erfindungsgemäßen Eingangsverstärkers sowie eines Verlaufes einer geeigneten Verstärkungskennlinie über der Zeit;
- Figur 3: ein Schaltbild eines Ausführungsbeispiels einer erfindungsgemäßen Vorrichtung; und
- Figur 4: ein Schaltbild eines alternativen Ausführungsbeispiels einer erfindungsgemäßen Vorrichtung.

### Ausführungsformen der Erfindung

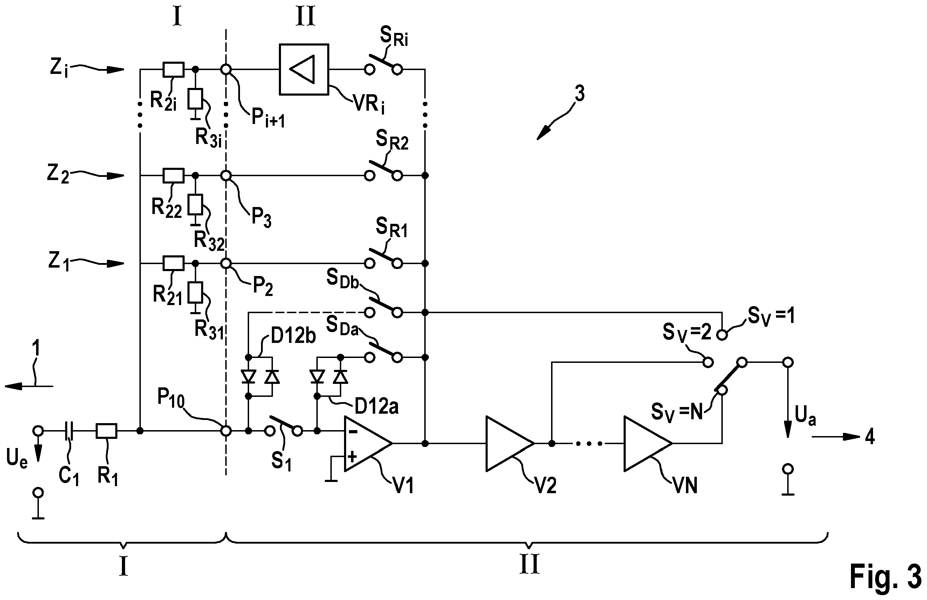

Figur 1 wurde in der Beschreibungseinleitung bereits in Verbindung mit dem Stand der Technik vorgestellt. Die nachfolgenden Figuren beziehen sich dabei im Wesentlichen auf das in Figur 3 beispielhaft detailliert dargestellte Element 3 (Empfangsverstärkereinrichtung).

Figur 2 zeigt ein Zeitdiagramm a) eines mittels der vorliegenden Erfindung realisierbaren Verlaufes des Betrags einer Eingangsimpedanz Zᵢₙ einer Empfangsverstärkereinrichtung 3. Auf der Abszisse ist der Zeitverlauf eines Echozyklus' und auf der Ordinate der Betrag der Empfängerimpedanz nicht maßstabsgemäß, da logarithmisch skaliert dargestellt. Dabei symbolisiert ein erster Zeitbereich T1 den Zeitabschnitt eines Sendevorgangs einer erfindungsgemäßen Vorrichtung. Erkennbar ist, dass die Eingangsimpedanz Zᵢₙ in diesem Zeitbereich erheblich höher, als im nachfolgenden Empfangsbereich T2 ist. Auf diese Weise wird während des Sendevorgangs wenig Energie von der Empfangsverstärkereinrichtung 3 aufgenommen und ein Großteil der vom Signalgenerator 2 zur Verfügung gestellten Energie über den Wandler 1 abgestrahlt. Ein zweiter Zeitabschnitt T2 symbolisiert die Eingangsimpedanz, welche sich während des Empfangsvorgangs mittels der erfindungsgemäßen Vorrichtung realisieren lässt. Während des Zeitraums T2 ist der Betrag der Eingangsimpedanz Zᵢₙ gleich dem Betrag der Wandlerimpedanz Z_{Wandler}, was der Anpassungsbedingung zur idealen Übertragung von Signalen zwischen dem Wandler und der Empfangsverstärkereinrichtung entspricht. In der Teilfigur b) wird die zugehörige Verstärkungskennlinie der erfindungsgemäßen Empfangsverstärkereinrichtung 3 einmal wertkontinuierlich 5 als Idealfall und wertdiskret 6 als Beispiel einer technischen Realisierung ebenfalls in nichtproportionaler Skalierung dargestellt. Im Zeitabschnitt T1 ist die Verstärkung deutlich unterhalb von 1, das heißt, das Eingangssignal wird bedämpft, um beispielsweise die Sendespannung von z.B. 150V an die maximale Eingangsspannung der Auswerteeinheit von z.B. 1,5V anzupassen. Im nachfolgenden Zeitraum T21 nimmt die Bedämpfung ab um den Betrag B auf die "Verstärkung" von 1. Im darauffolgenden Zeitraum T22 steigt die Verstärkung auf einen Wert A, welcher deutlich oberhalb von 1 liegt. Im weiteren Verlauf T23 nimmt die Verstärkung weiter zu. Erfahrungsgemäß verläuft die Verstärkung bevorzugt degressiv, d.h., sowohl die bevorzugt anfänglich verwendete Bedämpfung als auch die nachfolgende reale Verstärkung ändern sich jeweils anfänglich stärker.

Figur 3 zeigt ein Schaltbild eines Ausführungsbeispiels einer erfindungsgemäßen Empfangsverstärkereinrichtung 3. Durch Pfeile sind die angrenzenden Bauteile Wandler 1 (eingangsseitig) und Auswerteeinheit 4 (ausgangsseitig) angedeutet. Die Eingangsspannung Uₑ wird auf eine Reihenschaltung aus einem Eingangskondensator C₁ und einem Ohmschen Widerstand R₁ gegeben. An den Ohmschen Widerstand R₁ schließt sich eine erfindungsgemäße Vielzahl von Impedanzen Z₁, Z₂, Zᵢ an, welche je nach Stellung der Schalter S_{R1}, S_{R2}, S_{Ri} als Rückkoppelpfade für einen ersten Verstärker V1 oder als Dämpfungsglieder für nachfolgende Stufen verwendet werden können. Ein erster zwischen dem Eingang P10 und dem Ausgang des ersten Verstärkers V1 angeordneter Impedanzzweig Z1 umfasst einen Ohmschen Widerstand R₂₁, an welchen sich ein gegen die elektrische Masse geschalteter Ohmscher Widerstand R₃₁ anschließt. Der Ausgang des aus den Ohmschen Widerständen R₂₁, R₃₁ gebildeten Spannungsteilers ist über einen ersten Schalter S_{R1} mit dem Ausgang des ersten Verstärkers V1 verbunden. Parallel zu der ersten Impedanz Z1 ist eine zweite Impedanz Z2 vorgesehen. Ein erster zwischen dem Eingang P10 und dem Ausgang des ersten Verstärkers V1 angeordneter Impedanzzweig Z2 umfasst einen Ohmschen Widerstand R₂₂, an welchen sich ein gegen die elektrische Masse geschalteter Ohmscher Widerstand R₃₂ anschließt. Der Ausgang des aus den Ohmschen Widerständen R₂₂, R₃₂ gebildeten Spannungsteilers ist über einen dritten Eingangspin P3 über einen ersten Schalter S_{R2} mit dem Ausgang des ersten Verstärkers V1 verbunden. Parallel zur ersten Impedanz Z1 und zur zweiten Impedanz Z2 ist ein i-ter Rückkoppelzweig Zi angedeutet. Auch der i-te Rückkoppelzweig umfasst einen Ohmschen Widerstand R₂ᵢ, an welchem sich ein gegen Masse geschalteter Ohmscher Widerstand R₃ᵢ anschließt. An den Ausgang des aus den Widerständen R₂ᵢ und R₃ᵢ gebildeten Spannungsteilers ist an einem ersten Pin P1 ein in Richtung des Eingangs P10 orientierter Operationsverstärker VRᵢ als Treiber angeschlossen. Mit anderen Worten ist der Eingang des Treibers VRᵢ über einen Schalter S_{Ri} mit dem Ausgang des ersten Verstärkers V1 verbunden, während der Ausgang des Treibers VRᵢ mit dem Eingang P10 des ersten Verstärkers V1 verbunden ist. Zusätzlich sind zwei parallele nichtlineare Rückkoppelzweige, umfassend zwei antiparallel geschaltete Dioden D12a und einen Schalter S_{Da} bzw. zwei antiparallel geschaltete Dioden D12b und einen Schalter S_{Db}, zwischen dem Ausgang und dem Eingang P10 des ersten Verstärkers V1 vorgesehen.

Zwischen den eingangsseitigen Anschlusspunkten der nichtlinearen Rückkoppelzweige ist ein Schalter S₁ vorgesehen. Ausgangsseitig ist der erste Verstärker V1 mit dem Eingang eines zweiten Verstärkers V2 verbunden. Weiter ist der Ausgang des zweiten Verstärkers V2 mit dem Eingang eines N-ten Verstärkers VN verbunden. Eine ausgangsseitige Schalteinrichtung S_{V} ermöglicht eine Auswahl der verwendeten Verstärkerstufen. In einer ersten Schalterstellung S_{V} = 1 wird der Ausgang der ersten Verstärkerstufe V1 mit dem Ausgang der Empfangsverstärkereinrichtung 3 bzw. mit einem Eingang der Auswerteeinheit 4 verbunden. In einer zweiten Schaltstellung S_{V} = 2 wird der Ausgang des zweiten Verstärkers V2 mit dem Ausgang der Empfangsverstärkereinrichtung 3 bzw. der Auswerteeinheit 4 verbunden. In einer N-ten Schalterstellung S_{V} = N wird der Ausgang des N-ten Verstärkers VN mit dem Ausgang der Empfangsverstärkereinrichtung 3 bzw. mit einem Eingang der Auswerteeinheit 4 verbunden. Der in Figur 3 dargestellte Aufbau einer erfindungsgemäßen Empfangsverstärkereinrichtung 3 ermöglicht dabei eine Vielzahl möglicher Konstellationen, welche zu unterschiedlichen Verstärkungen bzw. Bedämpfungen einer Eingangsspannung Uₑ gegenüber einer Ausgangsspannung Uₐ verwendet werden können. Dabei ist ein erster Bereich I außerhalb einer integrierten Schaltung (ASIC) und ein zweiter Bereich II innerhalb einer integrierten Schaltung (ASIC) angeordnet. Indem der Schalter S₁ innerhalb des ASIC geöffnet wird, wird die erste Verstärkerstufe V1 deaktiviert, so dass der Ohm'sche Widerstand R₁ und der Kondensator C₁ nicht ausschließlich den Innenwiderstand der ersten Verstärkerstufe V1 bestimmen. Dies gelingt insbesondere durch Aufbrechen der Rückkoppelung, also mit Hilfe der Schalter S_{Da}, S_{Db}, S_{R1}, S_{R2} und S_{Ri}. Ist S₁ geöffnet, kann die Spannung am Eingang P10 nicht zum negativen Eingang der ersten Verstärkerstufe V1 gelangen, weswegen der Ausgang des ersten Verstärkers nicht auf Spannungsänderungen am Eingang P10 des ASCI reagiert. In diesem Fall ist die Rückkopplung der ersten Verstärkerstufe außer Betrieb, weswegen nicht, wie sonst beim invertierenden Aufbau von Operationsverstärkern üblich, am Eingang P10 des ASIC die virtuelle Masse entsteht und somit die Eingangsimpedanz der Schaltung nicht nur durch den Wert von R₁, sondern auch durch die Werte der Rückkopplungswiderstände R₂ᵢ, R₃ᵢ und weiterer Widerstände bestimmt wird. Eine solche Konfiguration kann gewählt werden, um ein während des Sendens für eine nachfolgende Auswerteschaltung 4 zu hohe Eingangsspannung Uₑ zu dämpfen. Daher bilden die Ohmschen Widerstände R₁, R₂₁ und R₃₁ bei geschlossenem Schalter S_{R1} einen Spannungsteiler, dessen Abgriff an PIN P2 in das ASIC geführt wird. Bei geeigneter Auslegung der Widerstände R₁, R₂₁ und R₃₁ wird so der maximale Wert der Ausgangsspannung Uₐ nicht überschritten. Hierzu werden die dem ersten Verstärker V1 nachfolgenden Verstärker V2, VM durch Anwenden der Schaltstellung S_{V} = 1 überbrückt. Indem weitere Schalter S_{R2}, S_{Ri} geschlossen werden, kann der Spannungsteiler zusätzlich modifiziert werden. Während des Ausschwingens und während des Echoempfangs, insbesondere kurz vor dem Ende des Sendevorgangs, sollte der Wandler 1 durch die Empfangsverstärkereinrichtung 3 mit einem Widerstand belastet werden, der seinem Innenwiderstand entspricht. Ist R₁ entsprechend gewählt, kann durch Schließen des Schalters S₁ sowie weiterer Schalter S_{Da}, S_{Db}, S_{R1}, S_{R2} und S_{Ri} die erste Verstärkerstufe V1 regelnd eingreifen, so dass am Eingang P10 des ASIC der Ohmsche Widerstand R₁ einen virtuellen Massepunkt erhält. Dabei fließen durch den Rückkoppelwiderstand R₂ᵢ insbesondere zu Beginn des Ausschwingens relativ starke Ströme. Da die erste Verstärkerstufe V1 in ihrer Grundfunktionalität nur geringe Ströme treiben muss, kann zur Bereitstellung dieser starken Ströme ein spezieller stromtreibender Verstärker VRi im Rückkoppelzweig eingesetzt werden. In einer bevorzugten Ausgestaltung ist der entsprechende Schalter S_{Ri} in den Strom treibenden Verstärker VRi integriert, um mit ihm einen schaltbaren Strom treibenden Verstärker auszubilden. Durch die zuschaltbaren nichtlinearen Impedanzen D12a und D12b im Rückkopplungspfad verändert sich der Wert der Rückkopplungsimpedanz und damit die Verstärkung in Abhängigkeit der Signalstärke. Solche nichtlinearen Impedanzen können beispielsweise - wie dargestellt - durch gegenläufig gepolte Halbleiter (Dioden) realisiert werden. Dabei ist der dargestellte nichtlineare Zweipol D12b eine Alternative zum nichtlinearen Zweipol D12a. Während D12a nur aktiviert werden kann, wenn der Operationsverstärker V1 über den Schalter S1 aktiviert ist, kann D12b auch als den dämpfenden Widerständen R3i parallel geschaltete signalstärkeabhängige Impedanz bei deaktiviertem Operationsverstärker V1 wirken. Unter Umständen kann bei der Verwendung des nichtlinearen Zweipols D12a dauerhaft auf einen entsprechenden Schalter S_{Da} verzichtet werden, wenn die Ausgangsspannung des Operationsverstärkers V1 nie eine der Durchbruchsspannung des Zweipols D12a entsprechende Amplitude von beispielsweise ±0,7V überschreiten soll. Durch die Verwendung des nichtlinearen Zweipols D12a kann die Verstärkung des ersten Verstärkers V1 momentanspannungsabhängig moduliert werden. Dabei bewirken Ausgangsspannungen des Verstärkers V1 gegenüber Masse mit einem Betrag oberhalb der Flussspannung der verwendeten Dioden (z.B. 0,5 bis 0,7 V) eine Verstärkungsreduktion, weil in diesen Fällen die Impedanz der Dioden parallel zu R₂ᵢ wirkt. Im Messzyklus ist dies dann der Fall, wenn die Eingangsspannung Uₑ noch relativ hoch ist, d.h. üblicherweise während des Ausschwingens. Bei sehr kleinen Eingangsspannungen und hohen Verstärkungen mittels des ersten Verstärkers V1 ist D12a wirkungslos. Um dabei unerwünschte Effekte (wie z.B. zusätzliches Rauschen oder Nichtlinearitäten der Verstärkung) zu vermeiden, sollte D12a mittels S_{Da} in diesem Amplitudenbereich abgeschaltet werden. Der nichtlineare Zweipol D12b kann beispielsweise als ein Element aufgefasst werden, dessen Impedanz mit zunehmender Spannung sinkt. Dieses ist dann beispielsweise im Rückkoppelzweig R₂ᵢ parallel geschaltet, wenn der Schalter S_{Rb} geschlossen ist. Bei kleinen Eingangsspannungen ist der Zweipol D12b wirkungslos und die Ausgangsspannung hängt nur vom Verhältnis R₂ᵢ/ R₁ ab und je höher die Eingangsspannung Uₑ wird, desto stärker bedämpft die Impedanz des dem Rückkoppelwiderstand R₂ᵢ parallel geschalteten Zweipols D12b die Verstärkung des Ausgangssignals Uₐ.

Bei stärkerer Abnahme der Eingangsspannung Uₑ muss die erfindungsgemäße Eingangsverstärkereinrichtung 3 die vom Wandler stammenden Signale verstärken. Dies kann beispielsweise bei geschlossenem Schalter S₁ und geschlossenem Schalter S_{R2} erfolgen, während die übrigen Schalter geöffnet und die Ausgangsseite der Schalteinrichtung die Stellung S_{V} = 1 aufweist.

Nimmt die Eingangssignalstärke Uₑ weiter ab, können durch Wechseln der Stellung der ausgangsseitigen Schalteinrichtung von S_{V} = 1 auf S_{V} = 2 bzw. S_{V} = M weitere Verstärkungsstufen V2, VN der Empfangsverstärkereinrichtung 3 hinzugeschaltet werden. Im Ergebnis erhöht sich die Gesamtverstärkung der Empfangsverstärkereinrichtung 3.

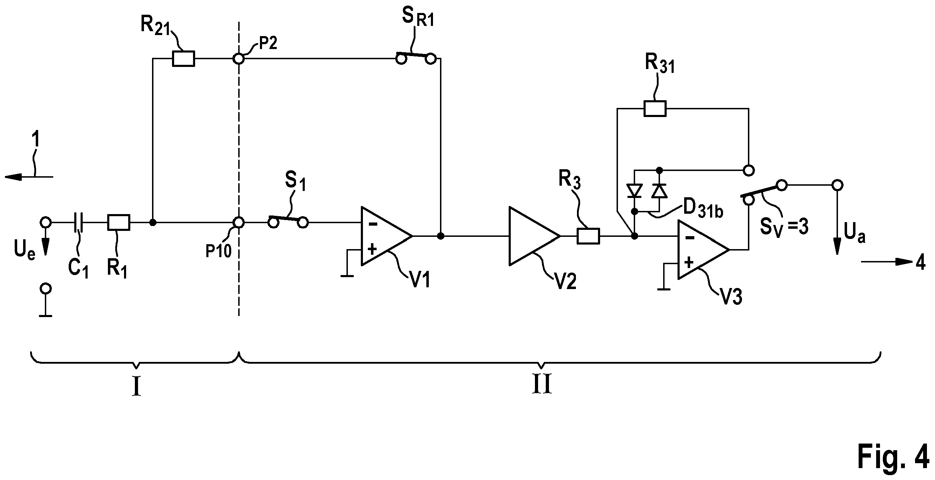

Figur 4 zeigt ein Schaltbild eines alternativen Ausführungsbeispiels einer erfindungsgemäßen Vorrichtung, gemäß welcher eine dritte Verstärkungsstufe V3 einen Ohmschen Rückkoppelwiderstand R₃₁ aufweist, der einem nichtlinearen Zweipol D_{31b} parallel geschaltet ist. Zudem ist zwischen dem Ausgang des zweiten Verstärkers V2 und dem nichtlinearen Rückkoppelzweig D_{31b} bzw. dem Ohmschen Rückkoppelwiderstand R₃₁ ein weiterer Ohmscher Widerstand R₃ vorgesehen. Die ausgangsseitige Schalteinrichtung befindet sich in der Schalterstellung S_{V} = 3. Dabei ist der Schalter S₁ ebenso wie der Schalter S_{R1} geschlossen. Auf diese Weise weist die dritte Verstärkungsstufe V3 eine Signalstärke-abhängige Verstärkung auf, wodurch die erfindungsgemäße Empfangsverstärkereinrichtung 3 eine starke Verstärkung mit Dynamikkompression realisiert. Mit anderen Worten wird auf diese Weise der Messbereich der Empfangsverstärkereinrichtung 3 dadurch erweitert, dass laute Signale nicht so fein aufgelöst werden müssen, wie leise Signale.

Im Ergebnis ermöglicht die vorliegende Erfindung, mit wenigen, einem ASIC vorgelagerten, Impedanzen einen großen bzw. den gesamten Dynamikbereich eines Umfeldmesssignals Uₑ abzubilden und zur Auswertung einer nachfolgenden Auswerteeinheit 4 zuzuführen.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne denselben Bereich der vorliegenden Erfindung zu verlassen, deren Schutzbereich durch die beigefügten Ansprüche definiert wird.

## Patentansprüche

1. Vorrichtung zur Umfeldsensorik umfassend
- einen Wandler (1) in Form eines Ultraschallwandlers zur Wandlung elektrischer Signale in Sendesignale,
- einen Signalgenerator (2) zur Erzeugung der elektrischen Signale,
- eine Empfangsverstärkereinrichtung (3) zur Verstärkung vom Wandler (1) empfangener Signale mittels eines ersten Verstärkers (V1), der als invertierender Operationsverstärker aufgebaut ist einer, in mehreren parallelen Rückkoppelzweigen (1...i) des ersten Verstärkers (V1) angeordneten, Vielzahl von Impedanzen (R₂ᵢ, R₃ᵢ, D12a, D12b,), wobei in einem dieser Rückkoppelzweige (i) ein stromtreibender Operationsverstärker (VRᵢ) als Treiber eines Spannungsteilers (R₂ᵢ, R₃ᵢ) vorgesehen ist, und wobei die Vorrichtung eingerichtet ist, eine geeignete Gesamtimpedanz aus der Vielzahl von Impedanzen (R₂ᵢ, R₃ᵢ, D12a, D12b,) über mehrere Schalter (S_{R1} ...S_{Ri}, S_{Da}, S_{Db}) aus den mehreren parallelen Rückkoppelzweigen (1...i) auszuwählen und damit die Ausgangssignalstärke der Empfangsverstärkereinrichtung (3) mittels der ausgewählten Gesamtimpedanz anzupassen, wobei
- vom Signalgenerator und/oder vom Wandler stammende elektrische Signale vordem Eingang (P10) der Empfangsverstärkereinrichtung (3) abgeschwächt werden, und/oder
- eine Rückkopplung der Empfangsverstärkereinrichtung (3) beeinflusst wird, **dadurch gekennzeichnet, dass** der Eingang des Treibers (VRᵢ) über einen Schalter (S_{Ri}) mit dem Ausgang des ersten Verstärkers (V1) verbunden ist, und der Ausgang des Treibers (VRᵢ) über den Spannungsteiler, der aus zwei ohmschen Widerständen (R₂ᵢ, R₃ᵢ), einem Rückkoppelwiderstand (R₂ᵢ) und einem gegen Masse geschalteten Widerstand (R₃ᵢ), gebildet ist, mit dem negativen Eingang (P10) des als invertierender Operationsverstärker aufgebauten ersten Verstärkers (V1) verbunden ist, so dass bei geschlossenem Schalter (S_{Ri}) die durch den Rückkopplungswiderstand (R₂ᵢ), insbesondere zu Beginn des Ausschwingens des Wandlers fließenden, relativ starken Ströme durch den Treiber (VRᵢ) bereitgestellt werden.

2. Vorrichtung nach Anspruch 1, wobei die Gesamtimpedanz aufgrund einer Zeitsteuerung und/oder eines Ergebnisses einer Signalstärkeermittlung, insbesondere einer Signalstärkeermittlung während eines vorherigen Messzyklus, ausgewählt wird.

3. Vorrichtung nach einem der vorstehenden Ansprüche, wobei die Vielzahl von Impedanzen neben den ohmschen Widerständen in einem weiteren, parallelen Rückkopplungszweig eine Impedanz (D12a, D12b,) mit nichtlinearer Strom-/Spannungs-Kennlinie umfasst.

4. Vorrichtung nach einem der vorstehenden Ansprüche, wobei die Empfangsverstärkereinrichtung (3) weiter mindestens einen dem ersten Verstärker (V1) nachgeschalteten zweiten Verstärker (V2, V3) umfasst, und die Vorrichtung eingerichtet ist, den ersten und den zweiten Verstärker (V1, V2, V3) zu deaktivieren und/oder einen Rückkoppelpfad des ersten Verstärkers (V1) zu öffnen, um die ausgewählte Gesamtimpedanz anstatt in einem Rückkoppelpfad der Empfangsverstärkereinrichtung (3) in einen Vorwärts-Signalpfad einzubinden.

5. Vorrichtung nach einem der vorstehenden Ansprüche, wobei die Vorrichtung eingerichtet ist, mittels der ausgewählten Gesamtimpedanz den Innenwiderstand der Empfangsverstärkereinrichtung (3) während eines Sendevorgangs gegenüber einem Innenwiderstand vor oder nach dem Sendevorgang insbesondere mindestens um das Doppelte, zu erhöhen.

6. Vorrichtung nach einem der vorstehenden Ansprüche, wobei die Vorrichtung eingerichtet ist, zu einem vordefinierten Zeitpunkt gemessen ab dem Start eines Sendevorgangs mittels der ausgewählten Gesamtimpedanz den Innenwiderstand der Empfangsverstärkereinrichtung (3) einem im wesentlichen dem konjugiert komplexen Innenwiderstand des Wandlers (1) entsprechenden Impedanzwert anzugleichen.

7. Vorrichtung nach einem der vorstehenden Ansprüche, wobei die Empfangsverstärkereinrichtung (3) mehrere hintereinander geschaltete Verstärker (V1, V2, V3, VN) umfasst, und die Vorrichtung eingerichtet ist,
- mittels der ausgewählten Gesamtimpedanz das Verstärkungsverhalten, insbesondere eine Bedämpfung/Verstärkung eines dem ersten Verstärker (V1) nachfolgenden Verstärkers (V2, V3, VN) anzupassen, und/oder
- dem ersten Verstärker (V1) nachfolgende Verstärker (V2, V3, VN) wahlweise zu aktivieren und/oder zu deaktivieren.

8. Vorrichtung nach Anspruch 7, wobei mindestens ein dem ersten Verstärker (V1) nachfolgender Verstärker (V2, V3, VN) eine signalstärkeabhängige Verstärkungskennlinie aufweist, welche insbesondere durch ein nichtlineares Bauelement (D12b, D12a, D31b) im Rückkoppelpfad eines als Operationsverstärker ausgestalteten Verstärkers (V1, V3, VN) ausgeführt ist.

## Claims

1. Apparatus for an environment sensor system, comprising
- a transducer (1) in the form of an ultrasonic transducer for converting electrical signals into transmission signals,
- a signal generator (2) for generating the electrical signals,
- a receiving amplifier device (3) for amplifying signals received from the transducer (1) by means of a first amplifier (V1), which is constructed as an inverting operational amplifier, and a multiplicity of impedances (R₂ᵢ, R₃ᵢ, D12a, D12b) arranged in a plurality of parallel feedback paths (1...i) of the first amplifier (V1), wherein a current-driving operational amplifier (VRᵢ) is provided in one of these feedback paths (i) as a driver of a voltage divider (R₂ᵢ, R₃ᵢ), and wherein the apparatus is configured to select a suitable total impedance from the multiplicity of impedances (R₂ᵢ, R₃ᵢ, D12a, D12b) via a plurality of switches (S_{Ri}... S_{Ri}, S_{Da}, S_{Db}) from the plurality of parallel feedback paths (1...i) and thus to adapt the output signal strength of the receiving amplifier device (3) by means of the selected total impedance, wherein
- electrical signals coming from the signal generator and/or the transducer are attenuated upstream of the input (P10) of the receiving amplifier device (3), and/or
- feedback of the receiving amplifier device (3) is influenced, **characterized in that** the input of the driver (VRᵢ) is connected to the output of the first amplifier (V1) via a switch (SRᵢ) and the output of the driver (VRᵢ) is connected to the negative input (P10) of the first amplifier (V1) constructed as an inverting operational amplifier via the voltage divider which is formed from two non-reactive resistors (R₂ᵢ, R₃ᵢ), a feedback resistor (R₂ᵢ) and a resistor (R₃ᵢ) connected to earth, with the result that, when the switch (S_{Ri}) is closed, the relatively strong currents flowing through the feedback resistor (R₂ᵢ), in particular at the beginning of the decay of the transducer, are provided by the driver (V_{Ri}).

2. Apparatus according to Claim 1, wherein the total impedance is selected on the basis of time control and/or a result of a signal strength determination, in particular a signal strength determination during a previous measurement cycle.

3. Apparatus according to one of the preceding claims, wherein, in addition to the non-reactive resistors, the multiplicity of impedances comprise an impedance (D12a, D12b) with a non-linear current/voltage characteristic curve in a further parallel feedback path.

4. Apparatus according to one of the preceding claims, wherein the receiving amplifier device (3) also comprises at least one second amplifier (V2, V3) connected downstream of the first amplifier (V1), and the apparatus is configured to deactivate the first and second amplifiers (V1, V2, V3) and/or to open a feedback path of the first amplifier (V1) in order to incorporate the selected total impedance in a forward signal path instead of in a feedback path of the receiving amplifier device (3).

5. Apparatus according to one of the preceding claims, wherein the apparatus is configured to increase the internal resistance of the receiving amplifier device (3) during a transmitting operation in comparison with an internal resistance before or after the transmitting operation, in particular at least to double it, using the selected total impedance.

6. Apparatus according to one of the preceding claims, wherein the apparatus is configured to adjust the internal resistance of the receiving amplifier device (3) to an impedance value corresponding substantially to the complex conjugate internal resistance of the transducer (1) using the selected total impedance at a predefined time measured from the start of a transmitting operation.

7. Apparatus according to one of the preceding claims, wherein the receiving amplifier device (3) comprises a plurality of amplifiers (V1, V2, V3, VN) connected in series, and the apparatus is configured
- to adjust the amplification behaviour, in particular an attenuation/gain of an amplifier (V2, V3, VN) downstream of the first amplifier (V1), using the selected total impedance, and/or
- to selectively activate and/or deactivate amplifiers (V2, V3, VN) downstream of the first amplifier (V1).

8. Apparatus according to Claim 7, wherein at least one amplifier (V2, V3, VN) downstream of the first amplifier (V1) has a gain characteristic curve which is dependent on the signal strength and is formed, in particular, by a non-linear component (D12b, D12a, D31b) in the feedback path of an amplifier (V1, V3, VN) in the form of an operational amplifier.

## Revendications

1. Dispositif de capteur d'environnement comprenant
- un transducteur (1) sous la forme d'un transducteur à ultrasons destiné à convertir des signaux électriques en signaux d'émission,
- un générateur de signaux (2) destiné à générer les signaux électriques,
- un dispositif amplificateur de réception (3) destiné à amplifier des signaux reçus en provenance du convertisseur (1) au moyen d'un premier amplificateur (V1) réalisé sous la forme d'un amplificateur opérationnel inverseur
et
une pluralité d'impédances (R₂ᵢ, R₃ᵢ, D12a, D12b,) disposées dans plusieurs branches de rétroaction parallèles (1...i) du premier amplificateur (V1), dans lequel il est prévu, dans l'une desdites branches de rétroaction (i), un amplificateur opérationnel (VRᵢ) commandé en courant en tant que circuit d'attaque d'un diviseur de tension (R₂ᵢ, R₃ᵢ), et
dans lequel le dispositif est conçu pour sélectionner une impédance totale appropriée parmi la pluralité d'impédances (R₂ᵢ, R₃ᵢ, D12a, D12b,) par l'intermédiaire de plusieurs commutateurs S_{R1}...S_{Ri}, S_{Da}, S_{Db}) à partir desdites multiples branches de rétroaction parallèles (1...i) et pour ajuster ainsi l'intensité du signal de sortie du dispositif amplificateur de réception (3) au moyen de l'impédance totale sélectionnée, dans lequel
- des signaux électriques provenant du générateur de signaux et/ou du convertisseur sont atténués avant l'entrée (P10) du dispositif amplificateur de réception (3), et/ou
- une rétroaction du dispositif amplificateur de réception (3) est soumise à une influence,
**caractérisé en ce que** l'entrée du circuit d'attaque (VRᵢ) est reliée à la sortie du premier amplificateur (V1) par l'intermédiaire d'un commutateur (S_{Ri}), et la sortie du circuit d'attaque (VRᵢ) est reliée par l'intermédiaire du diviseur de tension, qui se compose de deux résistances ohmiques (R₂ᵢ, R₃ᵢ), d'une résistance de rétroaction (R₂ᵢ) et d'une résistance (R₃ᵢ) connectée à la masse, à l'entrée négative (P10) du premier amplificateur (V1), qui est réalisé sous la forme d'un amplificateur opérationnel inverseur, de sorte que lorsque le commutateur (S_{Ri}) est fermé, les courants relativement intenses qui passent à travers la résistance de rétroaction (R₂ᵢ), notamment au début de la décroissance du convertisseur, sont fournis par le circuit d'attaque (VRᵢ).

2. Dispositif selon la revendication 1, dans lequel l'impédance totale est sélectionnée sur la base d'une synchronisation et/ou d'un résultat d'une détermination d'intensité du signal, notamment d'une détermination d'intensité du signal au cours d'un cycle de mesure précédent.

3. Dispositif selon l'une des revendications précédentes,
dans lequel la pluralité d'impédances comprend, en plus des résistances ohmiques, une impédance (D12a, D12b,) présentant une caractéristique courant/tension non linéaire dans une autre branche de rétroaction parallèle.

4. Dispositif selon l'une des revendications précédentes, dans lequel le dispositif amplificateur de réception (3) comprend en outre au moins un deuxième amplificateur (V2, V3) connecté en aval du premier amplificateur (V1), et le dispositif est conçu pour désactiver les premier et deuxième amplificateurs (V1, V2, V3) et/ou ouvrir un trajet de rétroaction du premier amplificateur (V1) afin d'introduire l'impédance totale sélectionnée dans un trajet de signal direct plutôt que dans un trajet de rétroaction du dispositif amplificateur de réception (3).

5. Dispositif selon l'une des revendications précédentes, dans lequel le dispositif est conçu pour augmenter, au moyen de l'impédance totale sélectionnée, la résistance interne du dispositif amplificateur de réception (3) au cours d'un processus d'émission, par rapport à une résistance interne avant ou après le processus d'émission, notamment d'au moins un facteur deux.

6. Dispositif selon l'une des revendications précédentes,
dans lequel le dispositif est conçu pour égaliser la résistance interne du dispositif amplificateur de réception (3) à une valeur d'impédance correspondant sensiblement à la résistance interne complexe conjuguée du transducteur (1) au moyen de l'impédance totale sélectionnée à un instant prédéfini, mesuré à partir du début d'un processus d'émission.

7. Dispositif selon l'une des revendications précédentes, dans lequel le dispositif amplificateur de réception (3) comprend plusieurs amplificateurs (V1, V2, V3, VN) connectés en série, et le dispositif est conçu pour
- adapter, au moyen de l'impédance totale sélectionnée, le comportement d'amplification, notamment une atténuation/amplification d'un amplificateur (V2, V3, VN) connecté en aval du premier amplificateur (V1), et/ou
- activer et/ou désactiver sélectivement des amplificateurs (V2, V3, VN) connectés en aval du premier amplificateur (V1).

8. Dispositif selon la revendication 7, dans lequel au moins un amplificateur (V2, V3, VN) connecté en aval du premier amplificateur (V1) présente une caractéristique d'amplification dépendant de l'intensité de signal, qui est notamment déterminée par une composante non linéaire (D12b, D12a, D31b) dans le trajet de rétroaction d'un amplificateur (V1, V3, VN) réalisé sous la forme d'un amplificateur opérationnel.
